(19)

Europäisches Patentamt
European Patent Office
Office européen des brevets

(11)  **EP 4 563 810 A1**

(12)  **EUROPEAN PATENT APPLICATION**
published in accordance with Art. 153(4) EPC

(43)  Date of publication:
**04.06.2025  Bulletin 2025/23**

(21)  Application number: **23844764.3**

(22)  Date of filing: **18.01.2023**

(51)  International Patent Classification (IPC):
**F03D 7/00** (2006.01)

(52)  Cooperative Patent Classification (CPC):
**F03D 7/00; F03D 7/02;** Y02E 10/72

(86)  International application number:
**PCT/CN2023/072756**

(87)  International publication number:
**WO 2024/021545 (01.02.2024 Gazette 2024/05)**

(84)  Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30)  Priority:  **29.07.2022  CN 202210909604**

(71)  Applicant: **Beijing Goldwind Science & Creation
Windpower Equipment Co. Ltd.
Beijing 100176 (CN)**

(72)  Inventors:
• SUN, Tao
  **Beijing 100176 (CN)**
• CHEN, Yong
  **Beijing 100176 (CN)**
• HUANG, Xiaofang
  **Beijing 100176 (CN)**
• SUN, Zhaochong
  **Beijing 100176 (CN)**

(74)  Representative: **Hoffmann Eitle
Patent- und Rechtsanwälte PartmbB
Arabellastraße 30
81925 München (DE)**

(54)  **CONTROL METHOD FOR WIND TURBINE, AND RELATED APPARATUS**

(57)  A control method for a wind turbine, and a related apparatus. On the basis of acquiring in real time an acceleration parameter corresponding to a target wind turbine, whether the target wind turbine meets a wind regime factor determination condition may be determined, wherein the wind regime factor determination condition is used for determining the reason why yaw vibration of the wind turbine exceeds a limit. If the target wind turbine meets the wind regime factor determination condition, it may be determined that an effective acceleration value of the wind turbine exceeds a vibration limit-exceeding threshold value due to a wind regime factor; and if the target wind turbine does not meet the wind regime factor determination condition, it may be determined that the effective acceleration value of the target wind turbine exceeds the vibration limit-exceeding threshold value due to a yaw brake disc system factor. Therefore, the wind turbine may be controlled on the basis of the accurately analyzed reason for exceeding a limit, so as to avoid performing a frequent shutdown operation owing to exceeding a limit due to the wind regime factor, thereby reducing the startup and shutdown frequency of the wind turbine and reducing the losses.

FIG. 1

## Description

The present application claims priority to Chinese Patent Application No.202210909604.2, titled "CONTROL METHOD FOR WIND TURBINE, AND RELATED APPARATUS", filed on July 29, 2022 with the China National Intellectual Property Administration, which is incorporated herein by reference in its entirety.

## FIELD

The present disclosure relates to the technical field of wind power generation, and in particular to a method for controlling a wind turbine and a related apparatus.

## BACKGROUND

Wind turbine yaw refers to a situation in which an orientation of the wind turbine changes. In a yaw process of the wind turbine, various factors may cause abnormal vibrations, which may affect normal operation of the wind turbine and hazard the wind turbine.

Therefore, it is required to monitor and protect the yaw process of the wind turbine according to related technologies. At present, a protect solution for vibration over-limit of wind turbine in the yaw process includes: immediately performing shutdown due to a failure in a case that the wind turbine operates in the yaw process and an effective acceleration value detected by an acceleration sensor arranged at a nacelle exceeds a preset fault threshold.

However, the protect solution for vibration over-limit according to the related technologies is prone to cause frequent shutdown of the wind turbine, affecting generated energy of the wind turbine and increasing a fatigue load caused by the startup and shutdown of the wind turbine.

## SUMMARY

In order to solve above problems, a method for controlling a wind turbine is provided according to the present disclosure, where a processing device can perform targeted control based on an accurate analysis result of yaw vibration, to reduce a shutdown frequency, increase the energy production and reduce loss caused by startup and shutdown while ensure stable operation of the wind turbine.

Technical solutions are provided as follows according embodiments of the present disclosure.

In a first aspect, a method for controlling a wind turbine is provided according to embodiments of to the present disclosure, the method includes:

acquiring acceleration parameters of a target wind turbine in real time;

determining, in response to the target wind turbine being in a yaw state, and an effective acceleration value corresponding to the acceleration parameters exceeding a vibration over-limit threshold, whether the target wind turbine meets a wind-condition factor determination condition;

determining that the effective acceleration value of the target wind turbine exceeds the vibration over-limit threshold due to a wind-condition factor if the target wind turbine meets the wind-condition factor determination condition.

determining that the effective acceleration value of the target wind turbine exceeds the vibration over-limit threshold due to a yaw brake-disc system factor if the target wind turbine does not meet the wind-condition factor determination condition; and

controlling an operation state of the target wind turbine in response to the effective acceleration value exceeding the vibration over-limit threshold due to the wind-condition factor or the yaw brake-disc system factor.

In an embodiment, the wind-condition factor determination condition includes that a maximum absolute value of an acceleration of the target wind turbine during a first preset time period before a target time instant is greater than an instantaneous acceleration threshold, and the method further includes:
determining the maximum absolute value of the acceleration of the target wind turbine during the first preset time period before the target time instant, where the target time instant is a time instant when the effective acceleration value exceeds the vibration over-limit threshold.

In an embodiment, the wind-condition factor determination condition includes that a maximum absolute value of an acceleration change rate in a dominant vibration direction of the target wind turbine during a second preset time period before a target time instant is greater than a first change rate threshold, or an average absolute value of the acceleration change rate in the dominant vibration direction of the target wind turbine during a third preset time period before the target time instant is greater than a second change rate threshold, and the third preset time period is shorter than the second preset time period. The method further includes:
determining an absolute value of the acceleration change rate in the dominant vibration direction of the target turbine during the second preset time period before the target time instant, and determining the average absolute value of the acceleration change rate in the dominant vibration direction of the target wind turbine during the third preset time period before the target time instant, where the target time instant is a time instant when the effective acceleration value exceeds the vibration over-limit threshold.

In an embodiment, the wind-condition factor determination condition includes that an average effective acceleration value of the target wind turbine during a fourth preset time period before the target time instant is less than the an average effective acceleration value threshold, and the method further includes:
determining the average effective acceleration value of the target wind turbine during the fourth preset time period before the target time instant, where the target time instant is a time instant when the effective acceleration value exceeds the vibration over-limit threshold.

In an embodiment, the wind-condition factor determination condition includes that a target duration of the target wind turbine is greater than a first duration threshold, and the method further includes:
determining the target duration of the target wind turbine, where the target duration is a duration from a time instant of last zero-crossing of an acceleration in a dominant vibration direction before a target time instant to the target time instant, the target time instant is a time instant when the effective acceleration value exceeds the vibration over-limit threshold, and the first duration threshold is determined based on a first-order frequency of a tower and a rotation frequency corresponding to the target wind turbine.

In an embodiment, the wind-condition factor determination condition includes that a dominant acceleration frequency in the dominant vibration direction of the target wind turbine is less than the frequency threshold, and the method further includes:
determining a dominant acceleration frequency in a dominant vibration direction of the target wind turbine.

In an embodiment, the controlling an operation state of the target wind turbine in response to the effective acceleration value exceeding the vibration over-limit threshold due to the wind-condition factor or the yaw brake-disc system factor includes:

adding 1 to a number of times of an abnormal wind-condition corresponding to the target wind turbine in response to the effective acceleration value of the target wind turbine exceeding the vibration over-limit threshold due to the wind-condition factor;

performing load-reduction control on the target wind turbine in response to the number of times of an abnormal wind condition corresponding to the target wind turbine during a target time period reaching a preset threshold; and

shutting down the target wind turbine in response to the effective acceleration value of the target wind turbine exceeding the vibration over-limit threshold due to the yaw brake-disc system factor.

In an embodiment, the method further includes:

acquiring respective acceleration parameters of the target wind turbine corresponding to N preset yaw time periods through taking the preset yaw time period as a unit, where N is a positive integer;

determining an abnormal yaw time period in the N preset yaw time periods based on the respective acceleration parameters corresponding to the N preset yaw time periods; and

generating yaw warning information in response to a proportion of abnormal yaw time periods in the N preset yaw time periods being greater than a proportion threshold, where the yaw warning information is used to identify a fault risk existing in the target wind turbine.

In an embodiment, the N preset yaw time periods include a target preset yaw time period, and the determining an abnormal yaw time period in the N preset yaw time periods based on the acceleration parameters corresponding to the N preset yaw time periods includes:

determining that the target preset yaw time period is an abnormal yaw time period in response to an average absolute value of an acceleration corresponding to the target preset yaw time period being greater than an average absolute value threshold;

and/or, determining that the target preset yaw time period is the abnormal yaw time period in response to an interval between two time instants of adjacent zero-crossings of the acceleration in a front-rear direction or a left-right direction during the target preset yaw time period being greater than a second duration threshold;

and/or, determining that the target preset yaw time period is the abnormal yaw time period in response to a number of times of zero-crossings of the acceleration during the target preset time period being less than or equal to 1.

In a second aspect, an apparatus for controlling a wind turbine is provided according to embodiments of to the present disclosure. The apparatus includes a first acquisition unit, a first determination unit, a second determination unit, a third determination unit and a control unit.

The first acquisition unit is configured to acquire acceleration parameters of a target wind turbine in real time.

The first determination unit is configured to determine, in response to the target wind turbine being in a yaw state, and an effective acceleration value corresponding to the acceleration parameters exceeding a vibration over-limit threshold, whether the target wind turbine meets a wind-condition factor determination condition.

The second determination unit is configured to determine that the effective acceleration value of the target wind turbine exceeds the vibration over-limit threshold due to a wind-condition factor if the target wind turbine meets the wind-condition factor determination condition.

The third determination unit is configured to determine that the effective acceleration value of the target wind turbine exceeds the vibration over-limit threshold due to a yaw brake-disc system factor if the target wind turbine does not meet the wind-condition factor determination condition.

The control unit is configured to control an operation state of the target wind turbine in response to the effective acceleration value exceeding the vibration over-limit threshold due to the wind-condition factor or the yaw brake-disc system factor.

In an embodiment, the wind-condition factor determination condition includes that a maximum absolute value of an acceleration of the target wind turbine during a first preset time period before a target time instant is greater than an instantaneous acceleration threshold. The apparatus further includes a fourth determination unit.

The fourth determination unit is configured to determine the maximum absolute value of the acceleration of the target wind turbine during the first preset time period before the target time instant, where the target time instant is a time instant when the effective acceleration value exceeds the vibration over-limit threshold.

In an embodiment, the wind-condition factor determination condition includes that a maximum absolute value of an acceleration change rate in a dominant vibration direction of the target wind turbine during a second preset time period before the target time instant is greater than a first change rate threshold, or an average absolute value of the acceleration change rate in the dominant vibration direction of the target wind turbine during a third preset time period before the target time instant is greater than a second change rate threshold. The third preset time period is shorter than the second preset time period. The apparatus further includes a fifth determination unit.

The fifth determination unit is configured to determine the absolute value of the acceleration change rate in the dominant vibration direction of the target turbine during the second preset time period before the target time instant, and determine the average absolute value of the acceleration change rate in the dominant vibration direction of the target wind turbine during the third preset time period before the target time instant, where the target time instant is a time instant when the effective acceleration value exceeds the vibration over-limit threshold.

In an embodiment, the wind-condition factor determination condition includes that the average effective acceleration value of the target wind turbine during a fourth preset time period before the target time instant is less than an average effective acceleration value threshold. The apparatus further includes a sixth determination unit.

The sixth determination unit is configured to determine the average effective acceleration value of the target wind turbine during the fourth preset time period before the target time instant, where the target time instant is a time instant when the effective acceleration value exceeds the vibration over-limit threshold.

In an embodiment, the wind-condition factor determination condition includes that a target duration of the target wind turbine is greater than a first duration threshold. The apparatus further includes a seventh determination unit.

The seventh determination unit is configured to determine the target duration of the target wind turbine. The target duration is a duration from a time instant of last zero-crossing of an acceleration in a dominant vibration direction before a target time instant to the target time instant. The target time instant is a time instant when the effective acceleration value exceeds the vibration over-limit threshold. The first duration threshold is determined based on a first-order frequency of a tower and a rotation frequency corresponding to the target wind turbine.

In an embodiment, the wind-condition factor determination condition includes that a dominant acceleration frequency in the dominant vibration direction of the target wind turbine is less than the frequency threshold. The apparatus further includes an eighth determination unit.

The eighth determination unit is configured to determine the dominant acceleration frequency in the dominant vibration direction of the target wind turbine.

In an embodiment, the control unit is configured to:

add 1 to a number of times of an abnormal wind condition corresponding to the target wind turbine in response to the effective acceleration value of the target wind turbine exceeding the vibration over-limit threshold due to the wind-condition factor;

perform load-reduction control on the target wind turbine in response to the number of times of the abnormal wind condition corresponding to the target wind turbine during a target time period reaching a preset threshold; and

shut down the target wind turbine in response to the effective acceleration value of the target wind turbine exceeding the vibration over-limit threshold due to the yaw brake-disc system factor.

In an embodiment, the apparatus further includes a second acquisition unit, an eighth determination unit and a generation unit.

The second acquisition unit is configured to acquire respective acceleration parameters of the target wind turbine corresponding to N preset yaw time periods through taking the preset yaw time period as a unit.

The eighth determination unit is configured to determine an abnormal yaw time period in the N preset yaw time periods based on the respective acceleration parameters corresponding to the N preset yaw time periods.

The generation unit is configured to generate yaw warning information in response to a proportion of abnormal yaw time periods in the N preset yaw time periods being greater than a proportion threshold. The yaw warning information is used to identify a fault risk existing in the target wind turbine.

In an embodiment, the N preset yaw time periods include a target preset yaw time period, and the eighth determination unit is configured to:

determine that the target preset yaw time period is an abnormal yaw time period in response to the average absolute value of the acceleration corresponding to the target preset yaw time period being greater than an average absolute value threshold;

and/or, determine that the target preset yaw time period is the abnormal yaw time period in response to an interval between two time instants of adjacent zero-crossings of the acceleration in a front-rear direction or a left-right direction during the target preset yaw time period being greater than a second duration threshold;

and/or, determine that the target preset yaw time period is the abnormal yaw time period in response to a number of times of zero-crossings of the acceleration during the target preset time period being less than or equal to 1.

In a third aspect, a processing device is provided according to embodiments of the present disclosure. The processing device includes a processor and a memory.

The memory is configured to store program codes and transmit the program codes to the processor.

The processor is configured to, when executing instructions in the program codes, perform the method for controlling the wind turbine according to any one of the embodiments described in the first aspect.

In a fourth aspect, a computer readable storage medium is provided according to an embodiment of the present disclosure. The computer readable storage medium is configured to store computer program. The computer program is configured to perform the method for controlling the wind turbine according to any one of the embodiments described in the first aspect.

In a fifth aspect, a computer program product including instructions is provided according to an embodiment of the present disclosure. The computer program product, when running on a processing device, causes the processing device to perform the method for controlling the wind turbine according to any one of the embodiments described in the first aspect.

It can be seen from the above technical solutions, a method for controlling a wind turbine is provided according to the present disclosure. Acceleration parameters of a target wind turbine are acquired in real time. In response to the target wind turbine being in a yaw state and an effective acceleration value corresponding to the acceleration parameters exceeding a vibration over-limit threshold, it is determined whether the target wind turbine meets a wind-condition factor determination condition. The wind-condition factor determination condition is used to determine the cause why the yaw vibration of the wind turbine exceeds the limit. It is determined that the effective acceleration value of the target wind turbine exceeds the vibration over-limit threshold due to a wind-condition factor if the target wind turbine meets the wind-condition factor determination condition. It is determined that the effective acceleration value of the target wind turbine exceeds the vibration over-limit threshold due to a yaw brake-disc system factor if the target wind turbine does not meet the wind-condition factor determination condition. An operation state of the target wind turbine is controlled in response to the effective acceleration value exceeding the vibration over-limit threshold due to the wind-condition factor or the yaw brake-disc system factor. Therefore, the wind turbine is controlled based on causes obtained by accurate analysis for over-limit, avoiding a frequent shutdown operation for the over-limit caused by the wind-condition factor, thus reducing a frequency of startup and shutdown of the wind turbine, increasing the energy production and reducing the loss caused by startup and shutdown of the wind turbine.

**BRIEF DESCRIPTION OF THE DRAWINGS**

Hereinafter drawings to be applied in embodiments or in the conventional technology are briefly described, in order to clarify illustration of technical solutions according to embodiments of the present disclosure or in conventional technology. Apparently, the drawings in the following descriptions are only some embodiments of the present disclosure, and other drawings may be obtained by those skilled in the art based on the provided drawings without exerting creative efforts.

FIG. 1 is a flowchart of a method for controlling a wind turbine according to an embodiment of the present disclosure;

FIG. 2 is a schematic diagram of a method for controlling a wind turbine according to an embodiment of the present disclosure;

FIG. 3 is a schematic diagram of a method for controlling a wind turbine according to an embodiment of the present disclosure;

FIG. 4 is a schematic diagram of a method for controlling a wind turbine according to an embodiment of the present disclosure;

FIG. 5 is a schematic diagram of a method for controlling a wind turbine according to an embodiment of the present disclosure;

FIG. 6 is a schematic diagram of a method for controlling a wind turbine in a practical scenario according to an embodiment of the present disclosure;

FIG. 7 is a schematic diagram of a method for controlling a wind turbine in a practical scenario according to an embodiment of the present disclosure; and

FIG. 8 is a schematic structural diagram of an apparatus for controlling a wind turbine according to an embodiment of the present disclosure.

## DETAILED DESCRIPTION

Embodiments of the present disclosure are described as follows in conjunction with attaching drawings.

There are two main factors that cause vibration in a yaw process: a complex wind condition and a brake disc being excessively worn or contaminated in the yaw process. In a protection solution for the vibration during the yaw process according to the conventional technology, the factors that cause the vibration are not further distinguished, thus the wind turbine cannot implement adaptive control based on the root cause. The wind turbine cannot issue a warning in response to the wear and contamination of the brake disc being not serious (that is, before resulting in shutdown caused by a failure due to the the vibration over-limit) to guide the operation and maintenance personnel to make an operation and maintenance plan in light-wind weather. The wind turbine cannot identify the vibration over-limit caused by the complex wind condition to perform fault ride-through and short-term load-reduction control, either. In a case that the shutdown due to a failure is performed directly in response to the vibration over-limit occuring in the yaw process, the energy production of the wind turbine is affected and the fatigue load caused by the startup and shutdown of the wind turbine is increased.

In order to solve the above technical problems, a method for controlling a wind turbine is provided according to embodiments of the present disclosure. A processing device is configured to perform targeted control based on an accurate analysis result of yaw vibration, to reduce a shutdown frequency, increase the energy production of the wind turbine and reduce loss caused by startup and shutdown while ensure stable operation of the wind turbine.

It can be understood that the method may be applied to a processing device. The processing device is configured to perform the control of wind turbine. In an embodiment, the above processing device may be a terminal device or a server with a function of controlling the wind turbine. This method may be executed independently by the terminal device or the server; and may further be applied to a network scenario in which communication is performed between the terminal device and the server, and be executed by the cooperation of the terminal device and the server. The terminal device may be a desktop computer, a laptop and the like. The server may be understood as an application server, or a Web server. In actual deployment, the server may be a standalone server, a cluster server, or a cloud platform. In another embodiment, the above processing device may be a controller of the wind turbine. The controller is configured to perform the method for controlling the wind turbine based on a computer program according to any one of embodiments described below.

The method for controlling the wind turbine provided according to the embodiments of the present disclosure is introduced as follows in conjunction with the attached drawings.

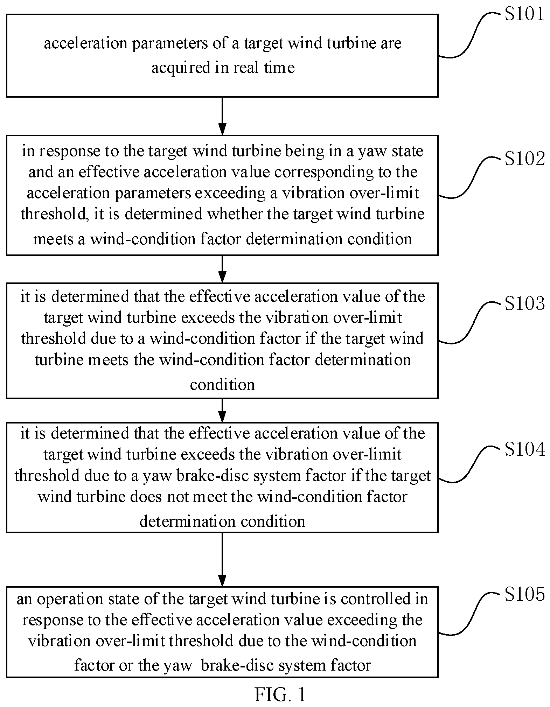

Referring to FIG. 1, FIG. 1 is a flowchart of a method for controlling a wind turbine according to an embodiment of the present disclosure. The method includes following steps S101 to S105.

In step S101, acceleration parameters of a target wind turbine are acquired in real time.

The target wind turbine may be a wind turbine that requires to be controlled. The acceleration parameters are used to reflect vibration of the target wind turbine. The acceleration parameters may include an acceleration x of the target wind turbine in a front-rear direction and an acceleration y of the target wind turbine in a left-right direction. In an embodiment, the acceleration parameters described above may be acquired through an acceleration sensor.

In step S102, in response to the target wind turbine being in a yaw state and an effective acceleration value corresponding to the acceleration parameters exceeding a vibration over-limit threshold, it is determined whether the target wind turbine meets a wind-condition factor determination condition.

In order to implement reasonable control for the target wind turbine, the processing device requires to accurately analyze the cause of the vibration over-limit of the target wind turbine in the yaw state. The processing device may detect in real time whether the target wind turbine is in the yaw state, and preset a vibration over-limit threshold. The vibration over-limit threshold is used to determine whether abnormal vibration occurs in the target wind turbine.

In response to the target wind turbine being in the yaw state, and the effective acceleration value corresponding to the acceleration parameters exceeding the vibration over-limit threshold, the processing device determines that the target wind turbine is in the yaw vibration over-limit state. In this case, the processing device determines whether the target wind turbine meets the wind-condition factor determination condition. The wind-condition factor determination condition is used to determine whether the yaw vibration over-limit state is caused by a wind-condition factor. The wind-condition factor refers to a wind factor in the environment. Excessive vibration may occur in the wind turbine in a direction and this excessive vibration may exceed the limit due to causes such as excessively strong wind in a short period. The effective acceleration value may be obtained by synthesizing acceleration values in the front-rear direction and the left-right direction, and a formula for the synthesizing is expressed as

$$A = \sqrt{x^2 + y^2}$$

where A represents the effective acceleration value.

In step S103, it is determined that the effective acceleration value of the target wind turbine exceeds the vibration over-limit threshold due to a wind-condition factor if the target wind turbine meets the wind-condition factor determination condition.

In step S104, it is determined that the effective acceleration value of the target wind turbine exceeds the vibration over-limit threshold due to a yaw brake-disc system factor if the target wind turbine does not meet the wind-condition factor determination condition.

In step S105, an operation state of the target wind turbine is controlled in response to the effective acceleration value exceeding the vibration over-limit threshold due to the wind-condition factor or the yaw brake-disc system factor.

The processing device performs targeted control on the target wind turbine based on the factors causing vibration over-limit determined in the above steps, thereby avoiding performing shutdown for all the factors causing vibration over-limit and reducing loss caused by startup and shutdown.

In an embodiment, in response to the effective acceleration value of the target wind turbine exceeding the vibration over-limit threshold due to the wind-condition factor, the processing device may perform fault ride-through on the target wind turbine. That is, the processing device may add 1 to a number of times of an abnormal wind condition corresponding to the target wind turbine, and obtain the number of times of the abnormal wind condition corresponding to the target wind turbine during a target time period. In response to the number of times of the abnormal wind condition corresponding to the target wind turbine during the target time period reaching a preset threshold, which indicates that currently the target wind turbine is in an abnormal wind condition, the processing device performs load-reduction control on the target wind turbine to ensure operation safety of the wind turbine.

In response to the effective acceleration value of the target wind turbine exceeding the vibration over-limit threshold due to the yaw brake-disc system, the processing device may shut down the target wind turbine to avoid more serious device failures of the target wind turbine.

It can be seen from the above technical solutions that a method for controlling a wind turbine is provided according to the present disclosure. Acceleration parameters of a target wind turbine are acquired in real time. In response to the target wind turbine being in a yaw state and an effective acceleration value corresponding to the acceleration parameters exceeding a vibration over-limit threshold, it is determined whether the target wind turbine meets a wind-condition factor determination condition. The wind-condition factor determination condition is used to determine the cause why the yaw vibration of the wind turbine exceeds the limit. It is determined that the effective acceleration value of the target wind turbine exceeds the vibration over-limit threshold due to a wind-condition factor if the target wind turbine meets the wind-condition factor determination condition. It is determined that the effective acceleration value of the target wind turbine exceeds the vibration over-limit threshold due to a yaw brake-disc system factor if the target wind turbine does not meet the wind-condition factor determination condition. An operation state of the target wind turbine is controlled in response to the effective acceleration value exceeding the vibration over-limit threshold due to the wind-condition factor or the yaw brake-disc system factor. Therefore, the wind turbine is controlled based on the causes obtained by accurate analysis for over-limit, avoiding a frequent shutdown operation for the over-limit caused by the wind-condition factor, thus reducing a frequency of startup and shutdown of the wind turbine, increasing the energy production and reducing the loss caused by startup and shutdown of the wind turbine.

In an embodiment, when setting the wind condition-factor determination condition, the processing device may analyze data characteristics corresponding to the two factors that cause yaw vibration over-limit.

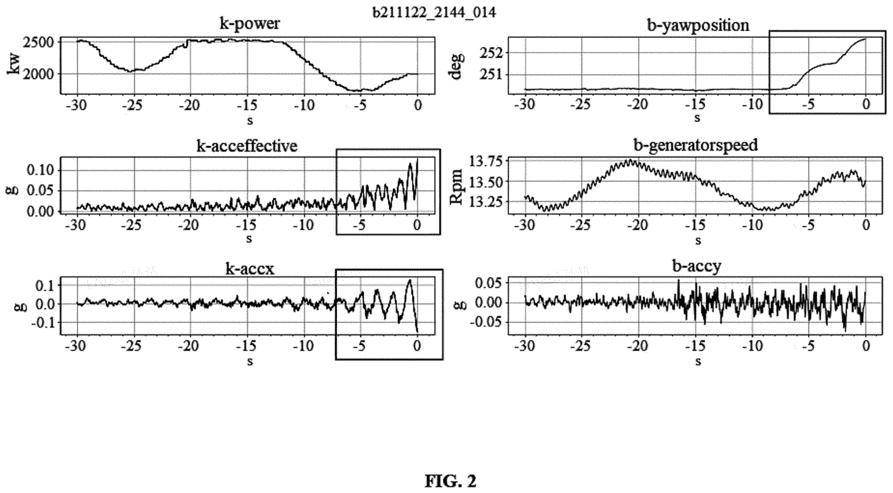

As shown in FIG. 2 to FIG. 5, in the Figures, k represents a left signal line, b represents a right signal line, power represents a wind turbine power, yawposition represents a yaw position, accx represents an acceleration in a front-rear direction, accy represents an acceleration in a left-right direction, fftaccx represents an acceleration spectrum in the front-rear direction, fftaccy represents an acceleration spectrum in the left-right direction, a value of 0 on the abscissa represents a time instant when the vibration exceeds the limit, and a value greater than 0 on the abscissa represents a time instant before the vibration exceeds the limit.

FIG. 2 shows a rotation frequency vibration of the wind turbine caused by a complex wind condition in the yaw process, which is not caused by wear or contamination of the yaw brake system. It can be seen that the accx amplitude is greater than the accy amplitude before the vibration exceeds the limit. For the vibration caused by the complex wind condition, a vibration frequency in a dominant vibration direction is substantially 3 times the rotation frequency or the first-order frequency of the tower, both of them being less than 1.2Hz, and an acceleration curve is relatively smooth.

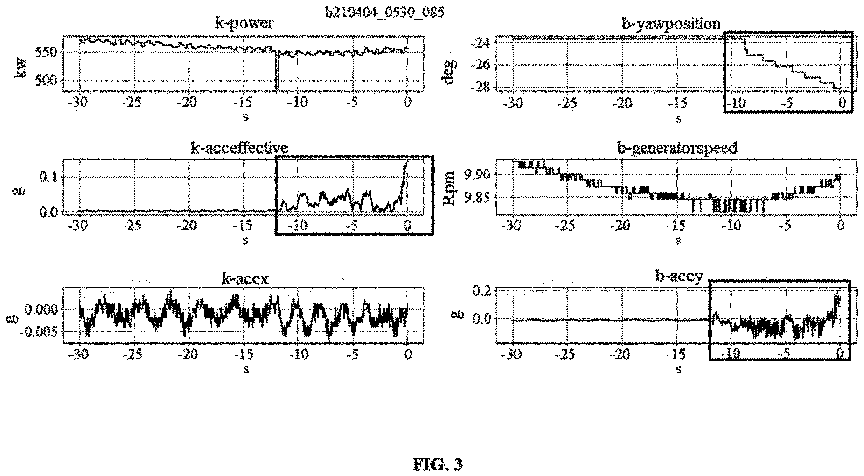

FIG. 3 shows a typical characteristic of vibration over-limit caused by wear or contamination of a yaw brake system. It can be seen that the dominant vibration direction is a direction corresponding to accy, the accy positively fluctuates relatively large, and the curve is rough. An absolute value of an accy change rate in the vibration over-limit caused by the wear or contamination of the yaw brake system is greater than that in the vibration over-limit caused by the complex wind condition.

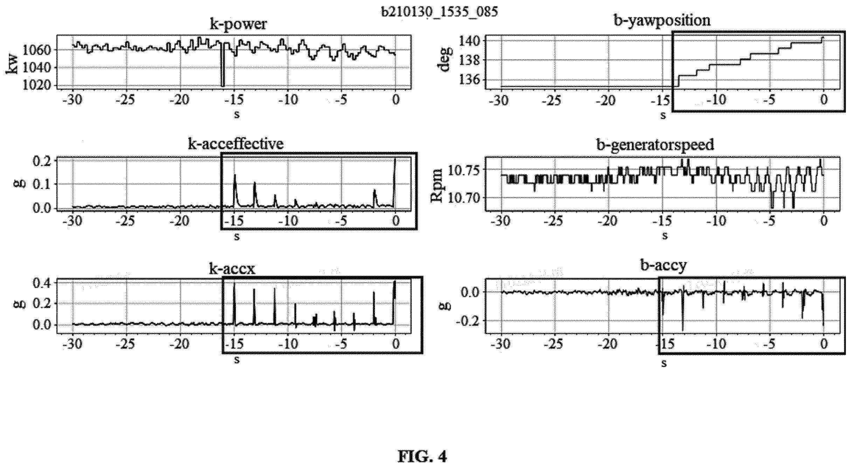

FIG. 4 shows another characteristic of vibration over-limit caused by wear or contamination of a yaw brake system. It can be seen that an instantaneous value of accx or accy is relatively large, which is also a determination characteristic.

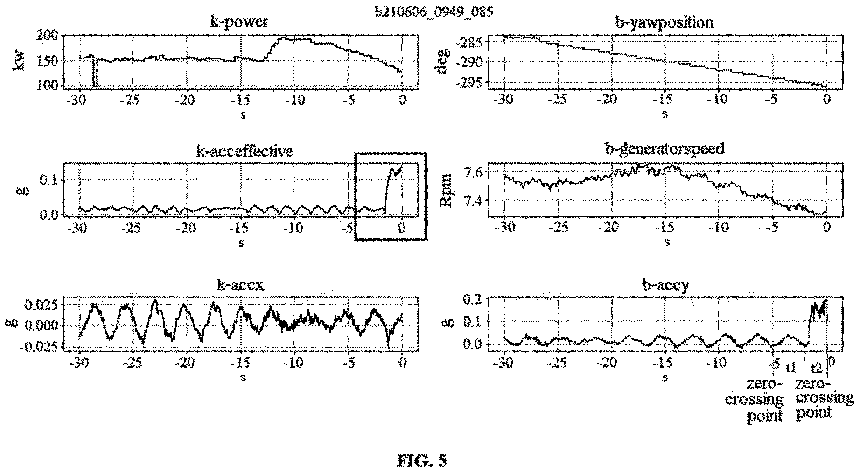

FIG. 5 also shows a characteristic of vibration over-limit caused by wear or contamination of a yaw brake system. It can be seen that the dominant vibration direction is a left-right direction, that is, a direction corresponding to accy. A normal period of an accy signal is t1, and t2 is equivalent to half of the period. It can be seen that a time instant of the acceleration crossing zero is delayed, that is, the period becomes longer. Whether the vibration over-limit is caused by the wear or contamination of the yaw brake system can be determined in this manner.

Based on the above, the processing device may perform condition determination according to the following various implementations.

In a possible implementation, the wind-condition factor determination condition includes that a maximum absolute value of an acceleration of the target wind turbine during a first preset time period before a target time instant is greater than an instantaneous acceleration threshold. The processing device may determine the maximum absolute value of the acceleration of the target wind turbine during the first preset time period before the target time instant. The target time instant is a time instant when the effective acceleration value exceeds the vibration over-limit threshold. The maximum absolute value of the acceleration is a maximum acceleration value in the left-right direction or the front-rear direction. The first preset time period may refer to a range from 30s to 90s, and the instantaneous acceleration threshold should be set to be greater than the vibration over-limit threshold. That is, if the maximum absolute value of the acceleration of the target wind turbine during the first preset time period before the target time instant is greater than the instantaneous acceleration threshold, it is determined that the factor is the wind-condition factor. If the maximum absolute value of the acceleration of the target wind generator during the first preset time period before the target time instant is less than or equal to the instantaneous acceleration threshold, it is determined that the factor is the yaw brake-disc system factor.

In a possible implementation, the wind-condition determination condition includes that a maximum absolute value of an acceleration change rate in a dominant vibration direction of the target wind turbine during a second preset time period before the target time instant is greater than the first change rate threshold, or an average absolute value of the acceleration change rate in the dominant vibration direction of the target wind turbine during a third preset time period before the target time instant is greater than the second change rate threshold. The third preset time period is shorter than the second preset time period.

The processing device may determine the absolute value of the acceleration change rate in the dominant vibration direction of the target wind turbine during the second preset time period before the target time instant, and determine the average absolute value of the acceleration change rate in the dominant vibration direction of the target wind turbine during the third preset time period before the target time instant. The target time instant is the time instant when the effective acceleration value exceeds the vibration over-limit threshold. A dominant vibration frequency is a frequency corresponding to a maximum spectrum amplitude in a spectrum obtained by performing fast Fourier transform on the acceleration signal.

Within a specific time period, if a maximum absolute value of acceleration peaks or acceleration valleys in the front-rear direction is greater than the maximum absolute value of the acceleration peaks or the acceleration valleys in the left-right direction, it is determined that the dominant vibration direction is the front-rear direction; otherwise, it is determined that the dominant vibration direction is the left-right direction.

The acceleration change rate is calculated by (accx detected in a current period - accx detected in a previous period)/detection period, and the unit of the detection period is a time unit (second). The acceleration change rate of accy is calculated in the same manner.

The second preset time period may be set as 30s to 90s. The first change rate threshold is a constant and may be equal to 4. The third preset time period may refer to a range from 10s to 60s. The second change rate threshold is a constant and is set to be greater than 0.3.

In a possible implementation, the wind-condition factor determination condition includes that an average effective acceleration value of the target wind turbine during a fourth preset time period before the target time instant is less than an average effective value threshold. Before the determination, the processing device may determine the average effective acceleration value of the target wind turbine during the fourth preset time period before the target time instant. The target time instant is a time instant when the effective acceleration value exceeds the vibration over-limit threshold. The fourth preset time period may be set to a range from 10s to 60s, and the average effective value threshold may be set to be 0.02.

In a possible implementation, the wind-condition factor determination condition includes that a target duration of the target wind turbine is greater than a first duration threshold. Before the determination, the processing device may determine the target duration of the target wind turbine, where the target duration is a duration from a time instant of last zero-crossing of the acceleration in the dominant vibration direction before the target time instant to the target time instant. The target time instant is a time instant when the effective acceleration value exceeds the vibration over-limit threshold, and the first duration threshold is determined based on a first-order frequency of the tower and a rotation frequency corresponding to the target wind turbine. The time instant of zero-crossing refers to a time instant when an acceleration direction of the target wind turbine changes to be a reverse direction thereof. The first-order frequency of the tower refers to a first-order natural mode frequency of the tower, which ranges from 0.1Hz to 0.3Hz. The rotation frequency of the turbine is calculated by: a rotation speed of the turbine/60*n. In a case that n=1, it represents 1 time the rotation frequency. The rotation frequency vibration of the turbine is mainly performed with 1 time the rotation frequency, 3 times the rotation frequency, 6 times the rotation frequency, and the frequency range is within 0.08Hz to 1.2Hz.

In a possible implementation, the wind-condition factor determination condition includes that a dominant acceleration frequency in the dominant vibration direction of the target wind turbine is less than a frequency threshold. Before determining factors, the processing device may determine the dominant acceleration frequency in the dominant vibration direction of the target wind turbine. If the dominant acceleration frequency in the dominant vibration direction of the target wind turbine is less than the frequency threshold, it is determined that the factor is the wind-condition factor, otherwise it is determined that the factor is the yaw brake-disc system factor. The frequency threshold is a constant, and a value range thereof is required to be larger than a rotation frequency range.

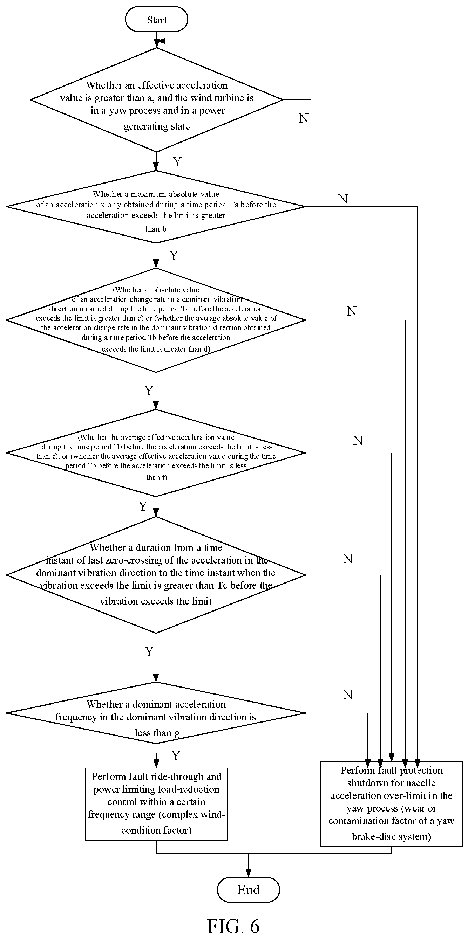

It can be understood that based on different control accuracy requirements, the above multiple determination conditions may be used separately or in combination. For example, in a practical scenario, as shown in FIG. 6, the processing device may first determine whether the wind turbine is in a state in which the effective acceleration value is greater than the vibration over-limit threshold a and the turbine is in the yaw process, the processing device may determine that the wind turbine is in the yaw vibration over-limit state. Then the processing device may determine whether the maximum absolute value of the acceleration x or y obtained during the first preset time period Ta before the acceleration exceeds the limit is greater than the instantaneous acceleration threshold b, whether the absolute value of the acceleration change rate in the dominant vibration direction obtained during the time period Ta before the acceleration exceeds the limit is greater than a first change rate threshold c or whether the average absolute value of the acceleration change rate in the dominant vibration direction obtained during a third preset time period Tb before the acceleration exceeds the limit is greater than a second change rate threshold d, whether the average effective acceleration value during the time period Tb before the acceleration exceeds the limit is less than an average effective value threshold e, whether a duration from the time instant of last zero-crossing of acceleration in the dominant vibration direction to the time instant when the vibration exceeds the limit is greater than a first duration threshold Tc before the vibration exceeds the limit, and whether the dominant acceleration frequency in the dominant vibration direction is less than a frequency threshold g. If all the above conditions are met, it is determined that the factor is the wind-condition factor. The processing device may perform fault ride-through and power-limiting load-reduction control within a certain frequency range. If any one of the above conditions is not met, it is determined that the factor is the wear or contamination of the yaw brake-disc system, and the processing device may perform the fault protection shutdown for the nacelle acceleration over-limit in the yaw process.

In addition, in a possible implementation, the processing device may further issue advance warning before yaw over-limit occurs. The processing device may take a preset yaw time period as a unit to acquire respective acceleration parameters corresponding to N preset yaw time periods of the target wind turbine, determine an abnormal yaw time period in the N preset yaw time periods based on the respective acceleration parameters corresponding to the N preset yaw time periods. The abnormal yaw time period refers to a yaw time period with abnormal acceleration parameters.

In response to a proportion of abnormal yaw time periods in the N preset yaw time periods being greater than a proportion threshold, it is indicated that the target wind turbine is in a state in which there has been abnormal acceleration parameters for a relatively long duration. In this case, although the acceleration parameters do not meet the over-limit fault threshold, the processing device can still generate yaw warning information for identifying a fault risk existing in the target wind turbine.

In a possible implementation, the N preset yaw time periods include a target preset yaw time period. When analyzing whether the target preset yaw time period is an abnormal yaw time period, the processing device determines whether the average absolute value of acceleration in the target preset yaw time period is greater than the average absolute value threshold based on the respectivle acceleration parameters of the target preset yaw time period. It is determined that the target preset yaw time period is an abnormal yaw time period in response to the average absolute value of acceleration in the target preset yaw time period being greater than the average absolute value threshold; and/or, it is determined that the target preset yaw time period is the abnormal yaw time period in response to an interval between two time instants of adjacent zero-crossings of the acceleration in a front-rear direction or a left-right direction during the target preset yaw time period being greater than the second duration threshold; and/or, it is determined that the target preset yaw time period is the abnormal yaw time period in response to a number of times of zero-crossings of the acceleration during the target preset time period being less than or equal to 1.

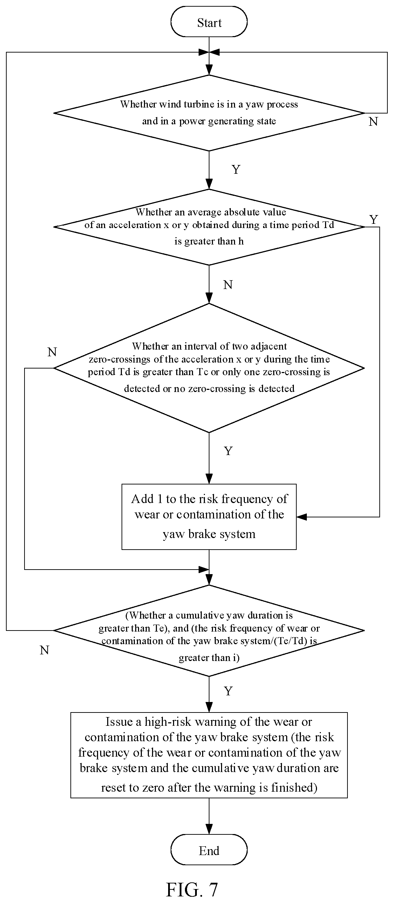

Referring to FIG. 7, in response to the wind turbine is in the yaw process and in the power generation state, the processing device may determine whether the average absolute value of x or y obtained during a preset yaw time period Td is greater than an average absolute value threshold h. If it is greater than the average absolute value threshold h, it is determined that the preset yaw time period is an abnormal yaw time period. Otherwise, it is determined whether an interval of two adjacent zero-crossings of the acceleration x or y during the time period Td is greater than the second duration threshold Tc or only one zero-crossing is detected or no zero-crossing is detected, if so, it is determined that the preset yaw time period is an abnormal yaw time period. Each time the abnormal yaw time period is determined, the processing device adds 1 to the risk frequency of wear or contamination of the yaw brake system. In response to a cumulative yaw duration being greater than Te, and the risk frequency of wear or contamination of the yaw brake system/(Te/Td) being greater than i, it is indicated that a relatively large number of the preset yaw time periods are abnormal in the plurality of preset yaw time periods within the Te time period. The processing device may issue the high-risk warning of wear or contamination of the yaw brake system, and the risk frequency of wear or contamination of the yaw brake system and the cumulative yaw duration are reset to zero after the warning is finished.

In this case, maintenance personnel can perform maintenance timely in light-wind weather (with no loss of energy production), avoiding shutdown caused by serious wear and avoiding loss of power. In a case that the wear is serious, fault shutdown is performed.

In addition, the method for controlling the wind turbine provided in the embodiments of the present disclosure can self-diagnose the cause of the vibration in the yaw process, and the processing device can issue advance warning according to a diagnosis result, or perform adaptive control, thus reducing the loss of energy production, improving revenue, and improving earnings and the efficiency of operation and maintenance.

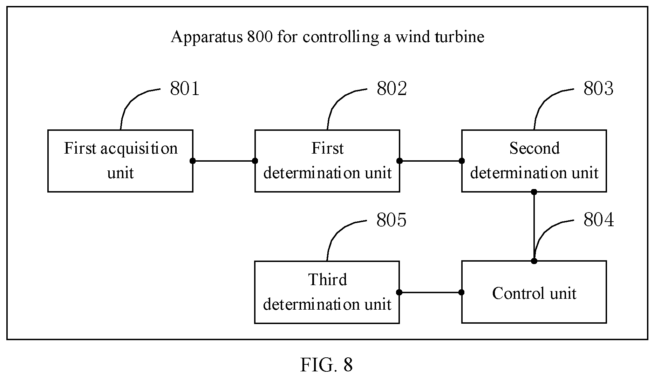

On the basis of the method for controlling the wind turbine provided in the above embodiments, an apparatus for controlling a wind turbine is provided according to embodiments of the present disclosure. Referring to FIG. 8, FIG. 8 is a schematic structural diagram of an apparatus 800 for controlling a wind turbine according to an embodiment of the present disclosure. The apparatus 800 includes a first acquisition unit 801, a first determination unit 802, a second determination unit 803, a third determination unit 804 and a control unit 805.

The first acquisition unit 801 is configured to acquire acceleration parameters of a target wind turbine in real time.

The first determination unit 802 is configured to determine, in response to the target wind turbine being in a yaw state, and an effective acceleration value corresponding to the acceleration parameters exceeding a vibration over-limit threshold, whether the target wind turbine meets a wind-condition factor determination condition.

The second determination unit 803 is configured to determine that the effective acceleration value of the target wind turbine exceeds the vibration over-limit threshold due to a wind-condition factor if the target wind turbine meets the wind-condition factor determination condition.

The third determination unit 804 is configured to determine that the effective acceleration value of the target wind turbine exceeds the vibration over-limit threshold due to a yaw brake-disc system factor if the target wind turbine does not meet the wind-condition factor determination condition.

The control unit 805 is configured to control an operation state of the target wind turbine in response to the effective acceleration value exceeding the vibration over-limit threshold due to the wind-condition factor or the yaw brake-disc system factor.

In an embodiment, the wind-condition factor determination condition includes that a maximum absolute value of an acceleration of the target wind turbine during a first preset time period before a target time instant is greater than an instantaneous acceleration threshold. The apparatus further includes a fourth determination unit.

The fourth determination unit is configured to determine the maximum absolute value of the acceleration of the target wind turbine during the first preset time period before the target time instant, where the target time instant is a time instant when the effective acceleration value exceeds the vibration over-limit threshold.

In an embodiment, the wind condition-factor determination condition includes that a maximum absolute value of an acceleration change rate in a dominant vibration direction of the target wind turbine during a second preset time period before the target time instant is greater than the first change rate threshold, or an average absolute value of the acceleration change rate in the dominant vibration direction of the target wind turbine during a third preset time period before the target time instant is greater than the second change rate threshold, and the third preset time period is shorter than the second preset time period. The apparatus further includes a fifth determination unit.

The fifth determination unit is configured to determine the absolute value of the acceleration change rate in the dominant vibration direction of the target turbine during the second preset time period before the target time instant, and determine the average absolute value of the acceleration change rate in the dominant vibration direction of the target wind turbine during the third preset time period before the target time instant, where the target time instant is a time instant when the effective acceleration value exceeds the vibration over-limit threshold.

In an embodiment, the wind-condition factor determination condition includes that the average effective acceleration value of the target wind turbine during a fourth preset time period before the target time instant is less than the average effective value threshold. The apparatus further includes a sixth determination unit.

The sixth determination unit is configured to determine the average effective acceleration value of the target wind turbine during the fourth preset time period before the target time instant, where the target time instant is a time instant when the effective acceleration value exceeds the vibration over-limit threshold.

In an embodiment, the wind-condition factor determination condition includes that a target duration of the target wind turbine is greater than a first duration threshold. The apparatus further includes a seventh determination unit.

The seventh determination unit is configured to determine the target duration of the target wind turbine, where the target duration is a duration from a time instant of last zero-crossing of the acceleration in the dominant vibration direction before the target time instant to the target time instant, and the target time instant is a time instant when the effective acceleration value exceeds the vibration over-limit threshold. The first duration threshold is determined based on a first-order frequency of the tower and a rotation frequency corresponding to the target wind turbine.

In an embodiment, the wind-condition factor determination condition includes that a dominant acceleration frequency in the dominant vibration direction of the target wind turbine is less than the frequency threshold. The apparatus further includes an eighth determination unit.

The eighth determination unit is configured to determine the dominant acceleration frequency in the dominant vibration direction of the target wind turbine.

In an embodiment, the control unit 805 is configured to:

add 1 to a number of times of an abnormal wind condition corresponding to the target wind turbine in response to the effective acceleration value of the target wind turbine exceeding the vibration over-limit threshold due to the wind-condition factor;

perform load-reduction control on the target wind turbine in response to the number of times of the abnormal wind condition corresponding to the target wind turbine during the target time period reaching a preset threshold; and

shut down the target wind turbine in response to the effective acceleration value of the target wind turbine exceeding the vibration over-limit threshold due to the yaw brake-disc system factor.

In an embodiment, the apparatus further includes a second acquisition unit, an eighth determination unit and a generation unit.

The second acquisition unit is configured to acquire respective acceleration parameters corresponding to N preset yaw time periods of the target wind turbine through taking the preset yaw time period as a unit.

The eighth determination unit is configured to determine an abnormal yaw time period in the N preset yaw time periods based on the respective acceleration parameters corresponding to the N preset yaw time periods.

The generation unit is configured to generate yaw warning information in response to a proportion of abnormal yaw time periods in the N preset yaw time periods being greater than a proportion threshold. The yaw warning information is used to identify a fault risk existing in the target wind turbine.

In an embodiment, the N preset yaw time periods include a target preset yaw time period, and the eighth determination unit is configured to:

determine that the target preset yaw time period is an abnormal yaw time period in response to the average absolute value of the acceleration corresponding to the target preset yaw time period being greater than the average absolute value threshold;

and/or, determine that the target preset yaw time period is the abnormal yaw time period in response to an interval between two time instants of adjacent zero-crossings of the acceleration in a front-rear direction or a left-right direction during the target preset yaw time period being greater than the second duration threshold;

and/or, determine the target preset yaw time period to be an abnormal yaw time period in response to a case that a number of times of zero-crossings of the acceleration during the target preset time period being less than or equal to 1.

In an embodiment of the present disclosure, a processing device is provided. The processing device includes a processor, and the processor is configured to:

acquire acceleration parameters of a target wind turbine in real time;

determine, in response to the target wind turbine being in a yaw state and an effective acceleration value corresponding to the acceleration parameters exceeding a vibration over-limit threshold, whether the target wind turbine meets a wind-condition factor determination condition;

determine that the effective acceleration value of the target wind turbine exceeds the vibration over-limit threshold due to a wind-condition factor if the target wind turbine meets the wind-condition factor determination condition;

determine that the effective acceleration value of the target wind turbine exceeds the vibration over-limit threshold due to a yaw brake-disc system factor if the target wind turbine does not meet the wind-condition factor determination condition; and

control an operation state of the target wind turbine in response to the effective acceleration value exceeding the vibration over-limit threshold due to the wind-condition factor or the yaw brake-disc system factor.

The processing device further includes a memory, and the memory is configured to store program codes and transmit the program codes to the processor. The processor is configured to, when executing instructions in the program codes, perform the method for controlling the wind turbine according to any one of the embodiments described above.

The units mentioned in the description of the embodiments of the present disclosure may be implemented by means of software, or otherwise by means of hardware. Names of units do not constitute a limitation on the units themselves.

In addition, a storage medium is provided according to an embodiment of the present disclosure. The storage medium is configured to store computer program. The computer program is configured to perform the method for controlling the wind turbine according to the above embodiments.

A computer program product including instructions is provided according to an embodiment of the present disclosure. The computer program product, when running on a processing device, causes the processing device to perform the method for controlling the wind turbine according to the above embodiments.

It can be understood by those skilled in the art that all or a part of steps for implementing the above method embodiments may be implemented by instructing hardware using program, the above program may be stored in a computer readable storage medium. When the program is executed, the steps in the above method embodiments are executed. The above storage medium may be at least one of following media that can store program codes: a read-only memory (ROM), a random access memory (RAM), a magnetic disk and an optical disk.

It should be noted that the embodiments in this specification are described in a progressive manner, the same or similar parts among the embodiments may be referred to each other, and each of the embodiments emphasizes the differences between the embodiment and other embodiments. Particularly, since the device embodiments and the system embodiments are substantially similar to the method embodiments, the device embodiments and the system embodiments are described briefly. For relevant parts, reference may be made to the description of the method embodiments. The above device embodiments and system embodiments are merely illustrative. The units described as separate components may or may not be physically separated, and the component displayed as a unit may or may not be a physical unit, that is, may be located in one place, or may be distributed on multiple network units. Some or all of the modules may be selected as needed to achieve the purpose of the solution of the embodiments. Those skilled in the art can understand and implement the solution without any creative effort.

The above description are only some embodiments of the present disclosure, and the protection scope of the present disclosure is not limited thereto. Any changes or replacements that may be easily conceived by those skilled in the art within the technical scope disclosed in the present disclosure should fall within the protection scope of the present disclosure. Therefore, the protection scope of the present disclosure should be subject to the protection scope of the claims.

**Claims**

1. A method for controlling a wind turbine, comprising:

acquiring acceleration parameters of a target wind turbine in real time;
determining, in response to the target wind turbine being in a yaw state and an effective acceleration value corresponding to the acceleration parameters exceeding a vibration over-limit threshold, whether the target wind turbine meets a wind-condition factor determination condition;
determining that the effective acceleration value of the target wind turbine exceeds the vibration over-limit threshold due to a wind-condition factor if the target wind turbine meets the wind-condition factor determination condition;
determining that the effective acceleration value of the target wind turbine exceeds the vibration over-limit threshold due to a yaw brake-disc system factor if the target wind turbine does not meet the wind-condition factor determination condition; and

controlling an operation state of the target wind turbine in response to the effective acceleration value exceeding the vibration over-limit threshold due to the wind-condition factor or the yaw brake-disc system factor.

2. The method according to claim 1, wherein the wind-condition factor determination condition comprises that a maximum absolute value of an acceleration of the target wind turbine during a first preset time period before a target time instant is greater than an instantaneous acceleration threshold, and the method further comprises:
determining the maximum absolute value of the acceleration of the target wind turbine during the first preset time period before the target time instant, wherein the target time instant is a time instant when the effective acceleration value exceeds the vibration over-limit threshold.

3. The method according to claim 1, wherein the wind-condition factor determination condition comprises that a maximum absolute value of an acceleration change rate in a dominant vibration direction of the target wind turbine during a second preset time period before a target time instant is greater than a first change rate threshold, or an average absolute value of the acceleration change rate in the dominant vibration direction of the target wind turbine during a third preset time period before the target time instant is greater than a second change rate threshold, the third preset time period is shorter than the second preset time period, and the method further comprises:
determining an absolute value of the acceleration change rate in the dominant vibration direction of the target turbine during the second preset time period before the target time instant, and determining the average absolute value of the acceleration change rate in the dominant vibration direction of the target wind turbine during the third preset time period before the target time instant, wherein the target time instant is a time instant when the effective acceleration value exceeds the vibration over-limit threshold.

4. The method according to claim 1, wherein the wind-condition factor determination condition comprises that an average effective acceleration value of the target wind turbine during a fourth preset time period before the target time instant is less than the an average effective acceleration value threshold, and the method further comprises:
determining the average effective acceleration value of the target wind turbine during the fourth preset time period before the target time instant, wherein the target time instant is a time instant when the effective acceleration value exceeds the vibration over-limit threshold.

5. The method according to claim 1, wherein the wind-condition factor determination condition comprises that a target duration of the target wind turbine is greater than a first duration threshold, and the method further comprises:
determining the target duration of the target wind turbine, wherein the target duration is a duration from a time instant of last zero-crossing of an acceleration in a dominant vibration direction before a target time instant to the target time instant, the target time instant is a time instant when the effective acceleration value exceeds the vibration over-limit threshold, and the first duration threshold is determined based on a first-order frequency of a tower and a rotation frequency corresponding to the target wind turbine.

6. The method according to claim 1, wherein the wind-condition factor determination condition comprises that a dominant acceleration frequency in a dominant vibration direction of the target wind turbine is less than a frequency threshold, and the method further comprises:
determining the dominant acceleration frequency in the dominant vibration direction of the target wind turbine.

7. The method according to claim 1, wherein the controlling an operation state of the target wind turbine in response to the effective acceleration value exceeding the vibration over-limit threshold due to the wind-condition factor or the yaw brake-disc system factor comprises:

adding 1 to a number of times of an abnormal wind condition corresponding to the target wind turbine in response to the effective acceleration value of the target wind turbine exceeding the vibration over-limit threshold due to the wind-condition factor;
performing load-reduction control on the target wind turbine in response to the number of times of the abnormal wind condition corresponding to the target wind turbine during a target time period reaching a preset threshold; and
shutting down the target wind turbine in response to the effective acceleration value of the target wind turbine exceeding the vibration over-limit threshold due to the yaw brake-disc system factor.

8. The method according to claim 1, further comprising:

acquiring respective acceleration parameters of the target wind turbine corresponding to N preset yaw time periods through taking the preset yaw time period as a unit, wherein N is a positive integer;
determining an abnormal yaw time period in the N preset yaw time periods based on the respective acceleration parameters corresponding to the N preset yaw time periods; and generating yaw warning information in response to a proportion of abnormal yaw time periods in the N preset yaw time periods being greater than a proportion threshold, wherein the yaw warning information is used to identify a fault risk existing in the target wind turbine.

9. The method according to claim 8, wherein the N preset yaw time periods comprise a target preset yaw time period, and the determining an abnormal yaw time period in the N preset yaw time periods based on the acceleration parameters corresponding to the N preset yaw time periods comprises:

determining that the target preset yaw time period is an abnormal yaw time period in response to an average absolute value of an acceleration corresponding to the target preset yaw time period being greater than an average absolute value threshold;

and/or, determining that the target preset yaw time period is the abnormal yaw time period in response to an interval between two time instants of adjacent zero-crossings of the acceleration in a front-rear direction or a left-right direction during the target preset yaw time period being greater than a second duration threshold;

and/or, determining that the target preset yaw time period is the abnormal yaw time period in response to a number of times of zero-crossings of the acceleration during the target preset time period being less than or equal to 1.

10. An apparatus for controlling a wind turbine, comprising a first acquisition unit, a first determination unit, a second determination unit, a third determination unit and a control unit, wherein

the first acquisition unit is configured to acquire acceleration parameters of a target wind turbine in real time;

the first determination unit is configured to determine, in response to the target wind turbine being in a yaw state and an effective acceleration value corresponding to the acceleration parameters exceeding a vibration over-limit threshold, whether the target wind turbine meets a wind-condition factor determination condition;

the second determination unit is configured to determine that the effective acceleration value of the target wind turbine exceeds the vibration over-limit threshold due to a wind-condition factor if the target wind turbine meets the wind-condition factor determination condition;

the third determination unit is configured to determine that the effective acceleration value of the target wind turbine exceeds the vibration over-limit threshold due to a yaw brake-disc system factor if the target wind turbine does not meet the wind-condition factor determination condition; and

the control unit is configured to control an operation state of the target wind turbine in response to the effective acceleration value exceeding the vibration over-limit threshold due to the wind-condition factor or the yaw brake-disc system factor.

11. A processing device, comprising a processor and a memory, wherein

the memory is configured to store program codes and transmit the program codes to the processor; and

the processor is configured to, when executing instructions in the program codes, perform the method for controlling the wind turbine according to any one of the claims 1 to 9.

12. A computer readable storage medium, wherein the computer readable storage medium is configured to store computer program, and the computer program is configured to perform the method for controlling the wind turbine according to any one of the claims 1 to 9.

13. A computer program product comprising instructions, wherein the computer program product, when running on a processing device, causes the processing device to perform the method for controlling the wind turbine according to any one of the claims 1 to 9.

acceleration parameters of a target wind turbine are acquired in real time — S101

in response to the target wind turbine being in a yaw state and an effective acceleration value corresponding to the acceleration parameters exceeding a vibration over-limit threshold, it is determined whether the target wind turbine meets a wind-condition factor determination condition — S102

it is determined that the effective acceleration value of the target wind turbine exceeds the vibration over-limit threshold due to a wind-condition factor if the target wind turbine meets the wind-condition factor determination condition — S103

it is determined that the effective acceleration value of the target wind turbine exceeds the vibration over-limit threshold due to a yaw brake-disc system factor if the target wind turbine does not meet the wind-condition factor determination condition — S104

an operation state of the target wind turbine is controlled in response to the effective acceleration value exceeding the vibration over-limit threshold due to the wind-condition factor or the yaw brake-disc system factor — S105

FIG. 1

FIG. 2

FIG. 3

b210130_1535_085

FIG. 4

EP 4 563 810 A1

FIG. 5

Start

Whether an effective acceleration value is greater than a, and the wind turbine is in a yaw process and in a power generating state

N

Y

Whether a maximum absolute value of an acceleration x or y obtained during a time period Ta before the acceleration exceeds the limit is greater than b

N

Y

(Whether an absolute value of an acceleration change rate in a dominant vibration direction obtained during the time period Ta before the acceleration exceeds the limit is greater than c) or (whether the average absolute value of the acceleration change rate in the dominant vibration direction obtained during a time period Tb before the acceleration exceeds the limit is greater than d)

N

Y

(Whether the average effective acceleration value during the time period Tb before the acceleration exceeds the limit is less than e), or (whether the average effective acceleration value during the time period Tb before the acceleration exceeds the limit is less than f)

N

Y

Whether a duration from a time instant of last zero-crossing of the acceleration in the dominant vibration direction to the time instant when the vibration exceeds the limit is greater than Tc before the vibration exceeds the limit

N

Y

Whether a dominant acceleration frequency in the dominant vibration direction is less than g

N

Y

Perform fault ride-through and power limiting load-reduction control within a certain frequency range (complex wind-condition factor)

Perform fault protection shutdown for nacelle acceleration over-limit in the yaw process (wear or contamination factor of a yaw brake-disc system)

End

FIG. 6

```
                              ┌─────────┐
                              │  Start  │
                              └────┬────┘
                                   │
        ┌──────────────────────────┼──────────────────┐
        │                          ▼                   │
        │         ╱Whether wind turbine is in a yaw process╲   N
        │         ╲   and in a power generating state    ╱────┘
        │                          │
        │                          │ Y
        │                          ▼
        │        ╱ Whether an average absolute value      ╲   Y
        │        ╲ of an acceleration x or y obtained during a time period Td ╱───┐
        │        ╲        is greater than h              ╱                      │
        │                          │                                            │
        │                          │ N                                          │
        │                          ▼                                            │
        │  N     ╱    Whether an interval of two adjacent   ╲                   │
        │ ┌──────╲ zero-crossings of the acceleration x or y during the time ╱  │
        │ │      ╲ period Td is greater than Tc or only one zero-crossing is ╱   │
        │ │      ╲   detected or no zero-crossing is detected ╱                 │
        │ │                        │                                            │
        │ │                        │ Y                                          │
        │ │                        ▼                                            │
        │ │          ┌────────────────────────────┐                            │
        │ │          │  Add 1 to the risk frequency of │◄─────────────────────┘
        │ │          │  wear or contamination of the   │
        │ │          │      yaw brake system           │
        │ │          └──────────────┬─────────────┘
        │ │                         │
        │ └─────────────────────────┤
        │                           ▼
        │      ╱   (Whether a cumulative yaw duration is      ╲
        │ N    ╲ greater than Te), and (the risk frequency of wear or ╱
        └──────╲ contamination of the yaw brake system/(Te/Td) is ╱
               ╲          greater than i)             ╱
                           │
                           │ Y
                           ▼
          ┌─────────────────────────────────────────┐
          │  Issue a high-risk warning of the wear or  │
          │ contamination of the yaw brake system (the risk │
          │ frequency of the wear or contamination of the yaw │
          │ brake system and the cumulative yaw duration are │
          │   reset to zero after the warning is finished)   │
          └──────────────────┬──────────────────────┘
                             │
                             ▼
                        ┌─────────┐
                        │   End   │
                        └─────────┘
```

FIG. 7

Apparatus 800 for controlling a wind turbine

801

First acquisition unit

802

First determination unit

803

Second determination unit

805

Third determination unit

804

Control unit

FIG. 8

## INTERNATIONAL SEARCH REPORT

| International application No. |
| --- |
| **PCT/CN2023/072756** |

**A. CLASSIFICATION OF SUBJECT MATTER**

F03D7/00(2006.01)i

According to International Patent Classification (IPC) or to both national classification and IPC

**B. FIELDS SEARCHED**

Minimum documentation searched (classification system followed by classification symbols)

F03D

Documentation searched other than minimum documentation to the extent that such documents are included in the fields searched

Electronic data base consulted during the international search (name of data base and, where practicable, search terms used)

CNABS, CNTXT, ENTXTC, SIPOABS, VEN, CNKI: 风机, 偏航, 振动, 阈值, 加速度, 风况, 刹车; Wind+, turbin+, yaw+, viberat+, valv+, accelerat+, condit+, break+, stop+.

**C. DOCUMENTS CONSIDERED TO BE RELEVANT**

| Category* | Citation of document, with indication, where appropriate, of the relevant passages | Relevant to claim No. |
| --- | --- | --- |
| X | CN 111706464 A (XINJIANG GOLDWIND SCIENCE & TECHNOLOGY CO., LTD.) 25 September 2020 (2020-09-25)<br>description, paragraphs 0026-0211, and figures 1-5 | 1-13 |
| A | CN 114061743 A (XINJIANG GOLDWIND SCIENCE & TECHNOLOGY CO., LTD.) 18 February 2022 (2022-02-18)<br>entire document | 1-13 |
| A | CN 201747522 U (CHONGQING KK-QIANWEI WINDPOWER EQUIPMENT CO., LTD.) 16 February 2011 (2011-02-16)<br>entire document | 1-13 |
| A | CN 110685869 A (CSSC HAIZHUANG WINDPOWER CO., LTD.) 14 January 2020 (2020-01-14)<br>entire document | 1-13 |
| A | US 2010080702 A1 (MATSUO ATSUSHI; FUKAMI KOJI; NOGUCHI TOSHIHIDE; HAYASHIDA KAZUKI; FUJITSUKA TEPPEI; YATOMI YUJI;) 01 April 2010 (2010-04-01)<br>entire document | 1-13 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **10 April 2023** | **08 May 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/072756**

| Patent document cited in search report | | | Publication date (day/month/year) | Patent family member(s) | | | Publication date (day/month/year) |
|---|---|---|---|---|---|---|---|
| CN | 111706464 | A | 25 September 2020 | None | | | |
| CN | 114061743 | A | 18 February 2022 | None | | | |
| CN | 201747522 | U | 16 February 2011 | None | | | |
| CN | 110685869 | A | 14 January 2020 | None | | | |
| US | 2010080702 | A1 | 01 April 2010 | WO | 2008126659 | A1 | 23 October 2008 |
| | | | | EP | 2143939 | A1 | 13 January 2010 |
| | | | | EP | 2143939 | A4 | 11 September 2013 |
| | | | | EP | 2143939 | B1 | 10 August 2016 |
| | | | | AU | 2008239293 | A1 | 23 October 2008 |
| | | | | AU | 2008239293 | B2 | 01 September 2011 |
| | | | | JP | 2008261245 | A | 30 October 2008 |
| | | | | JP | 4939286 | B2 | 23 May 2012 |
| | | | | CA | 2672005 | A1 | 23 October 2008 |
| | | | | CA | 2672005 | C | 28 May 2013 |
| | | | | US | 8043055 | B2 | 25 October 2011 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210909604